# EUROPEAN PATENT APPLICATION

(11) **EP 4 819 443 A1**
(43) Date of publication of application: **07.10.2026**
(21) Application number: 26165646.6
(22) Date of filing: 18.03.2026
(51) Int. Cl.: H02J 50/12, B60L 53/12, H02J 50/70

(54) **RADIATED EMISSION REDUCTION FOR WIRELESS CHARGING**

(30) Priority: 03.04.2025 US 202519169916
(71) Applicant: Tesla, Inc., Austin, TX 78725 (US)
(72) Inventor: ZHENG, Liran, Austin, TX, 78725 (US); PAN, Fei, Austin, TX, 78725 (US)
(74) Representative: Liesegang, Eva

(57) **Abstract**

Systems and methods are described for reducing emissions associated with wireless power transfer. One or more controllers may be configured to receive emissions data including an emission measurement associated with inductive charging between a vehicle pad and a ground pad. The one or more controllers may further determine one or more adjustment parameters based on the emissions data. The one or more adjustment parameters may include a bus voltage of the ground pad. The one or more adjustment parameters may include one or more of a ground pad duty cycle, a vehicle pad duty cycle, or a switching frequency. The one or more controllers may adjust the bus voltage of the ground pad in accordance with the one or more adjustment parameters.

## Description

### TECHNICAL FIELD

The present disclosure relates to wireless charging. More particularly, the disclosed technology relates to reducing radiated emissions for wireless charging.

### BACKGROUND

Batteries are components of a wide array of battery-powered devices, equipment, or various transportation platforms, such as electric vehicles, robots, electric bikes, electric motorcycles, drones, and many other types of apparatus. A battery can be paired with a wireless charging device and arranged to receive energy through electromagnetic coupling of a receiver pad with the wireless charging device. Specifically, the wireless charging device can induce electromagnetic fields using one or more internal coils, and one or more corresponding receiver coils connected to the battery can capture these electromagnetic fields within a certain proximity to the charging device. There are a variety of technical challenges associated with wireless charging.

### SUMMARY OF CERTAIN INVENTIVE ASPECTS

The systems, methods, and devices of this disclosure each have several innovative examples, no single one of which is solely responsible for all of the desirable attributes disclosed herein. Details of one or more implementations of the subject matter described in this specification are set forth in the accompanying drawings and the description below.

In some aspects, the techniques described herein relate to a method of wireless power transfer, the method including: receiving emissions data, the emissions data including an emission measurement associated with inductive charging between a vehicle pad and a ground pad; determining one or more adjustment parameters based on the emissions data, the one or more adjustment parameters including a bus voltage of the ground pad; and adjusting the bus voltage of the ground pad in accordance with the one or more adjustment parameters.

In some aspects, the techniques described herein relate to a method, further including adjusting a duty cycle of a switching circuit, wherein the one or more adjustment parameters includes the duty cycle of the switching circuit.

In some aspects, the techniques described herein relate to a method, wherein the switching circuit is coupled to an LC resonant circuit, the LC resonant circuit including a coil of the ground pad, the ground pad inductively coupled to a coil of the vehicle pad.

In some aspects, the techniques described herein relate to a method, wherein the switching circuit is an H bridge circuit.

In some aspects, the techniques described herein relate to a method, wherein said determining one or more adjustment parameters based on the emissions data includes determining a target value for each of the one or more adjustment parameters using an emissions reduction routine.

In some aspects, the techniques described herein relate to a method, wherein the emissions reduction routine includes: determining one or more expressions representing emissions based on a first current in the ground pad and a second current in the vehicle pad; based on the one or more expressions, determining zero voltage switching (ZVS) references; deriving a target duty cycle of a switching circuit based on the ZVS references, the switching circuit being included in one of the ground pad or the vehicle pad; and adjusting the duty cycle of the switching circuit based on the derived target duty cycle.

In some aspects, the techniques described herein relate to a method, further including storing the target ground pad bus voltage and the target duty cycle for the switching circuit as the one or more adjustment parameters.

In some aspects, the techniques described herein relate to a method, wherein said determining one or more adjustment parameters includes: assuming a vehicle side bus voltage is fixed; and assuming a battery power is fixed.

In some aspects, the techniques described herein relate to a system for wireless power transfer, the system including: one or more controllers configured to: receive emissions data, the emissions data including an emission measurement associated with inductive charging between a vehicle pad and a ground pad in an environment; determine one or more adjustment parameters based on the emissions data, the one or more adjustment parameters including a bus voltage of the ground pad; and adjust the bus voltage of the ground pad in accordance with the one or more adjustment parameters.

In some aspects, the techniques described herein relate to a system, wherein the one or more controllers are further configured to adjust a duty cycle of a switching circuit, wherein the one or more adjustment parameters includes the duty cycle of the switching circuit.

In some aspects, the techniques described herein relate to a system, wherein the switching circuit is coupled to an LC resonant circuit, the LC resonant circuit including a coil of the ground pad, the ground pad inductively coupled to a coil of the vehicle pad.

In some aspects, the techniques described herein relate to a system, wherein the switching circuit is an H bridge circuit.

In some aspects, the techniques described herein relate to a system, wherein, the one or more controllers are configured to determine one or more adjustment parameters based on the emissions data by at least determining a target value for each of the one or more adjustment parameters by implementing an emissions reduction routine.

In some aspects, the techniques described herein relate to a system, wherein to implement the emissions reduction routine, the one or more controllers are configured to: determine one or more expressions representing emissions based on current in the ground pad and current in the vehicle pad; based on the one or more expressions, determine zero voltage switching (ZVS) references; derive a target duty cycle of a switching circuit based on the ZVS references, the switching circuit corresponding to at least one of the ground pad or the vehicle pad; and adjust the duty cycle of the switching circuit based on the derived target duty cycle.

In some aspects, the techniques described herein relate to a system, wherein to implement the emissions reduction routine, the one or more controllers are further configured to store the target ground pad bus voltage, and the target duty cycle for at least one of the ground pad or the vehicle pad as the one or more adjustment parameters.

In some aspects, the techniques described herein relate to a system, further including the ground pad, the ground pad including at least part of the one or more controllers.

In some aspects, the techniques described herein relate to a system, further including the vehicle pad, the vehicle pad including at least part of the one or more controllers .

In some aspects, the techniques described herein relate to a system, wherein a controller of the one or more controllers is located in at least one of a wall of the environment, in the ground pad, or in the vehicle pad.

In some aspects, the techniques described herein relate to non-transitory computer-readable storage including instructions stored thereon that, when executed, cause one or more controllers to perform operations including: determining one or more adjustment parameters based on emissions data, the emissions data including an emission measurement associated with inductive charging between a vehicle pad and a ground pad of a wireless charging system, and the one or more adjustment parameters including a bus voltage of the ground pad; and causing the bus voltage of the ground pad to be adjusted in accordance with the one or more adjustment parameters.

In some aspects, the techniques described herein relate to a non-transitory computer-readable storage, wherein, to determine one or more adjustment parameters based on the emissions data, the instructions, when executed further cause the one or more controllers to perform operations including determining a target value for each of the one or more adjustment parameters by implementing an emissions reduction routine.

### BRIEF DESCRIPTION OF DRAWINGS

Aspects and advantages of the technology disclosed herein are described herein with reference to drawings of preferred examples, which are intended to illustrate, and not to limit, the present disclosure.
FIG. 1 shows a schematic representation of an example emissions testing setup for wireless charging.
FIGS. 2A-2D illustrate example circuit schematic diagrams of wireless charging systems in accordance with some aspects of the present disclosure.
FIG. 3 illustrates an example block diagram of a wireless charging pad according to some examples of the present disclosure.
FIG. 4 illustrates an example circuit schematic diagram of a wireless charging system according to some examples of the present disclosure.
FIG. 5A illustrates example emissions based on a ground pad current loop and a vehicle pad loop in accordance with some aspects of the present disclosure.
FIG. 5B illustrates an example emissions diagram based on a ground pad current loop and a vehicle pad current loop in accordance with some aspects of the present disclosure.
FIG. 6A illustrates equivalent circuits for a wireless charging system in accordance with some aspects of the present disclosure.
FIG. 6B illustrates an example plot representing the current phase shift with respect to a vehicle pad in accordance with some aspects of the present disclosure.
FIG. 6C illustrates an example plot representing an example current phase shift with respect to a ground pad (e.g., the ground pad of FIG. 1) in accordance with some aspects of the present disclosure.

### DETAILED DESCRIPTION

Aspects of the present disclosure relate to systems and methods for wirelessly charging battery packs via a wireless power transfer. More specifically, the present disclosure relates to changing emissions from wireless power transfer. A controller of the wireless charging system may, for example, change one or more adjustment parameters associated with the circuitry of the wireless charging system. This can reduce emissions associated with wireless power transfer.

The wireless charging system can be used to charge a vehicle, such as an electric vehicle with a battery pack. In these examples, the wireless charging device can be implemented as a ground pad or a vehicle pad. Power can be transmitted wirelessly from the ground pad to the vehicle pad. During transmission, some of the power transmitted from the ground pad may not reach the vehicle pad. Instead, some emissions may propagate in a different direction. These emissions may decrease energy efficiency associated with the wireless charging.

In vehicle wireless charging systems, radiated emissions can be a significant issue because power is transferred wirelessly or radiated. The emissions should kept below certain limits for product certification, which could limit the design space of the hardware and the performance of the system or even result in significant hardware redesign.

Standards for wireless charging can have limits for emissions associated with wireless charging. Reducing emissions associated with wireless charging can contribute to complying with such standards. For example, FCC 18 specifies compliance limits for inductive charging. Technical solutions in this disclosure can ensure compliance with FCC 18.

With technology disclosed herein, radiated emissions can be reduced in a way that can be hardware agnostic and enables the reductions without hardware changes or additional cost. This can be achieved by controlling one or more of transmitting coil current, receiving coil current, or phase such that the radiation from the transmitting and receiving sides can be cancelled to reduce the overall effects.

The above challenges, among others, are addressed by aspects of the present disclosure, which address these challenges by using a controller to modify one or more adjustment parameters of the wireless charging system. Modification of the adjustment parameters may keep the excess emissions within a threshold.

The emissions may, for example, be measured. In order to keep the excess emissions within a threshold, a controller of the wireless charging system may modify one or more adjustment parameters in response to emissions data from the measurements, for example, as described herein. The adjustment parameters may include, but are not limited to, a voltage of the ground pad, the duty cycle of a switching circuit of the ground pad, the duty cycle of a switching circuit of the vehicle pad, the like, or any suitable combination thereof.

A target value for each of the adjustment parameters may be determined by the controller based on the emissions measurements. Adjusting electrical circuit components to achieve the target values may reduce emissions values. The controller may accordingly modify electrical circuit components corresponding with at least one of the adjustment parameters to reduce emissions values to below a threshold.

Illustratively, the electrical circuit components of the wireless charging device can include circuitry to control the voltage of the ground pad, a switching circuit to control the duty cycle of the ground pad, a switching circuit to control the duty cycle of the vehicle pad, the like, or any suitable combination thereof. Such switching circuits can have a bridge topology, such as a H bridge, a stacked half bridge, or the like. In some examples, the circuitry can include multiple switches. Controlling operation of each of these switches can change the adjustment parameters. Controlling operation of each of these switches may, for example, change the duty cycle of the ground pad, the duty cycle of the vehicle pad, and the like, or some combination thereof.

The above-described aspects and other aspects of the disclosure will now be described with regard to certain examples, examples, and aspects, which are intended to illustrate, but not limit, the disclosure. The foregoing aspects and many of the attendant advantages of this disclosure will become more readily appreciated as the same become better understood by reference to the following description, when taken in conjunction with the accompanying drawings.

In this description, reference is made to the drawings where like reference numerals and/or terms can indicate identical or functionally similar elements. It will be understood that elements illustrated in the figures are not necessarily drawn to scale. Moreover, it will be understood that certain examples can include more elements than illustrated in a drawing and/or a subset of the elements illustrated in a drawing. Further, some examples can incorporate any suitable combination of features from two or more drawings. The headings are provided for convenience only and do not impact the scope or meaning of the claims.

### Example Emissions Testing Setup for Wireless Charging

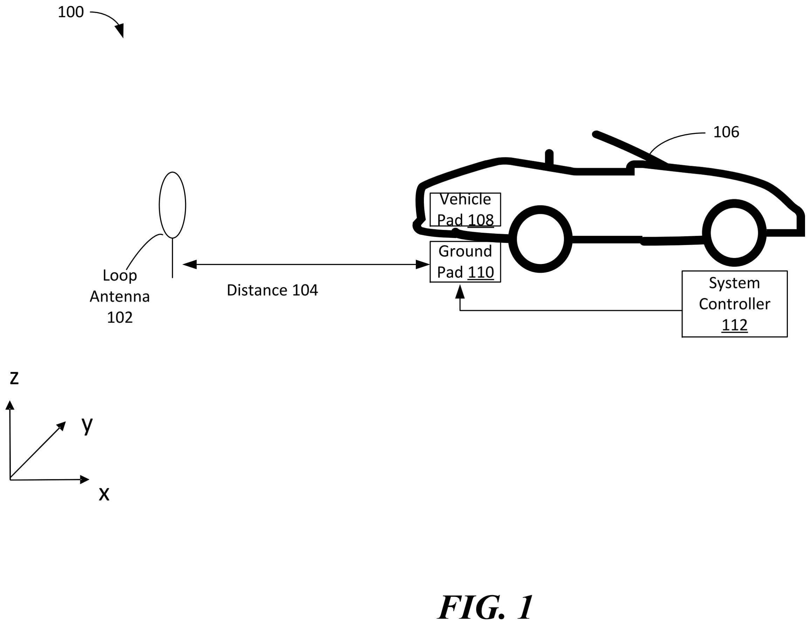

In certain applications, the wireless charging disclosed herein can be implemented in electric vehicles. Emissions data, including one or more emissions measurements, may be generated during wireless charging of the electric vehicle. FIG. 1 shows a schematic representation of an example emissions testing environment 100 for wireless charging. The example emissions testing environment 100 includes a loop antenna 102 separated by a distance 104 from a ground pad 110, and a vehicle pad 108 of an electric vehicle (EV) 106. A system controller 112, as illustrated, may communicate with the ground pad 110.

The loop antenna 102 may measure emissions from wireless charging of the electric vehicle 106 with the ground pad 110 and the vehicle pad 110. The system controller 112 may modify one or more parameters of at least one of the ground pad 110 or the vehicle pad 110 based on the emissions measurements. The modification of the one or more parameters may advantageously improve energy efficiency during wireless charging of EV 106. The modification of one or more parameters may, for example reduce emissions without decreasing an amount of power for charging EV 106. The reduction of emissions can ensure compliance with emission standards for wireless charging. The reduction of the emissions also means the lost energy is decreased for higher efficiency.

The loop antenna 102 may be any suitable type of loop antenna, such as a magnetic loop antenna, a self-resonant loop antenna, the like, or any suitable combination thereof. The loop antenna 102 may, as described herein, be used to take emissions measurements. The loop antenna 102 may, for example, take emissions measurements during wireless charging of EV 106 with ground pad 110 and vehicle pad 108.

While FIG. 1 illustrates a loop antenna 102, other options are possible. There may, for example, be more than one loop antenna 102. In further examples, at least some of the loop antennas 102 may be at different distances 104 from the ground pad 110. Loop antenna 102 may, as another example, be any other suitable type of antenna. Suitable types of antennas may include, but are not limited to, monopole antennas, dipole antennas, the like, or any suitable combination thereof.

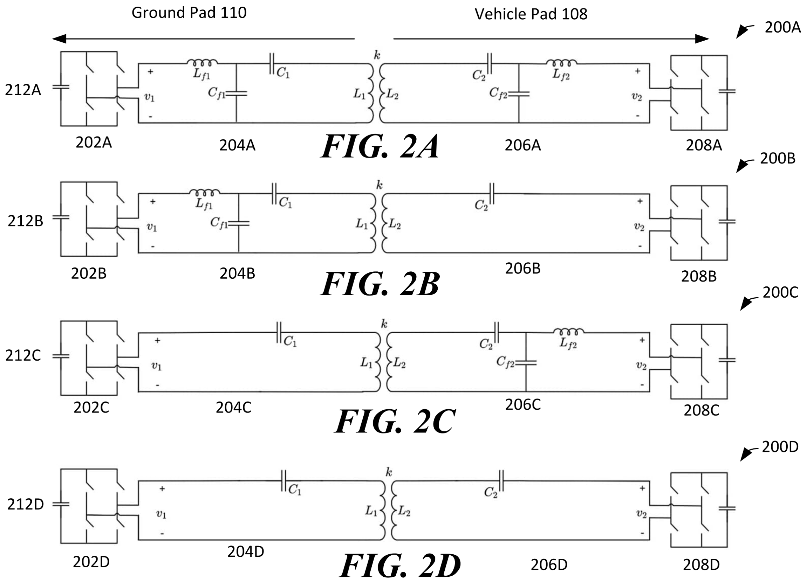

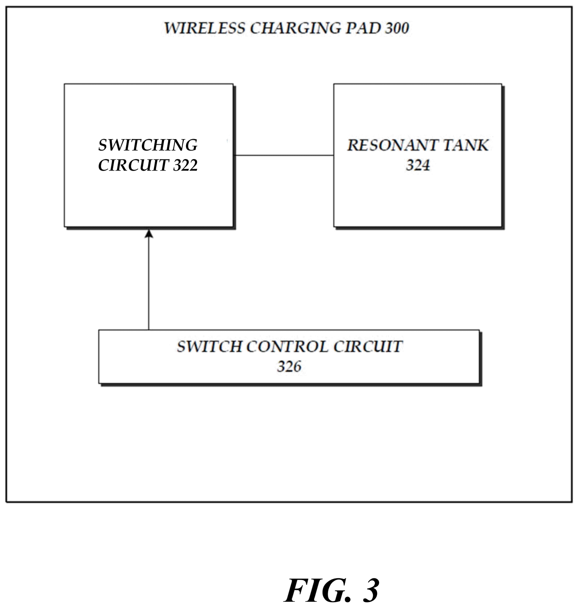

The vehicle pad 108 as illustrated may be within EV 106. The vehicle pad 108 may be configured to receive power from ground pad 110 during wireless charging of EV 106. The vehicle pad 108 may, for example, include a vehicle coil configured to receive power transmitted from the ground pad 110. Components of the vehicle pad 108 will be described further with respect to FIGS. 2A-2D and FIG. 3. The vehicle pad 108 may, in some examples, be electrically connected to a battery pack of EV 106. On receipt of power from ground pad 110, vehicle pad 108 may charge the battery pack of EV 106.

The ground pad 110 may correspond to a form factor that allows for the location on a floor for wirelessly charging with a vehicle having a vehicle pad coil, such as EV 106. The ground pad 110 as illustrated, has a form factor such that the EV 106 may be located directly above a top surface of the ground pad 110. Illustratively, the dimensions of the ground pad 110 (e.g., the height and width of the ground pad 110) may be configured so that a distance between the top surface of the ground pad 110 and a bottom surface of the EV 106 meet specific criteria. The specific criteria may include, but are not limited to, a minimum distance between the ground pad coil and vehicle pad coil, a maximum distance between the ground pad coil and the vehicle pad coil, the like, or some combination thereof. In some examples, the vehicle pad 108 and/or ground pad 110 (or combination) may be configured with additional components for adjusting (e.g., statically adjusting and/or dynamically adjusting) such distance or otherwise changing the relative orientation between the ground pad 110 and the EV 106.

The ground pad 110 may include at least a ground pad coil for causing the generation of magnetic fields from an input current provided from an energy source. The ground pad 110 can, for example, include a ground pad coil for causing the generation of magnetic fields from an input current provided from an energy source. The generated magnetic fields may be used to cause power transfer from ground pad 110 to vehicle pad 108 during wireless charging.

The system controller 112 may, in some examples, be electrically connected to ground pad 110. The system controller 112 may additionally, or alternatively, wirelessly communicate with ground pad 110. The system controller 112 may, for example, be located in a wall or wall box, in EV 106 such as in the vehicle pad 108, in the floor, or the like. The system controller 112 may, in some examples, include more than one controller. For example, emissions testing environment 100 may include multiple controllers in different locations. The locations may include in a wall, in the EV 106, in the floor, in the ground pad 110, in the vehicle pad 108, and the like, or some combination thereof. Each controller may carry out a subset of the functions of the system controller 112. Alternatively, each controller may carry out all the functionality of system controller 112.

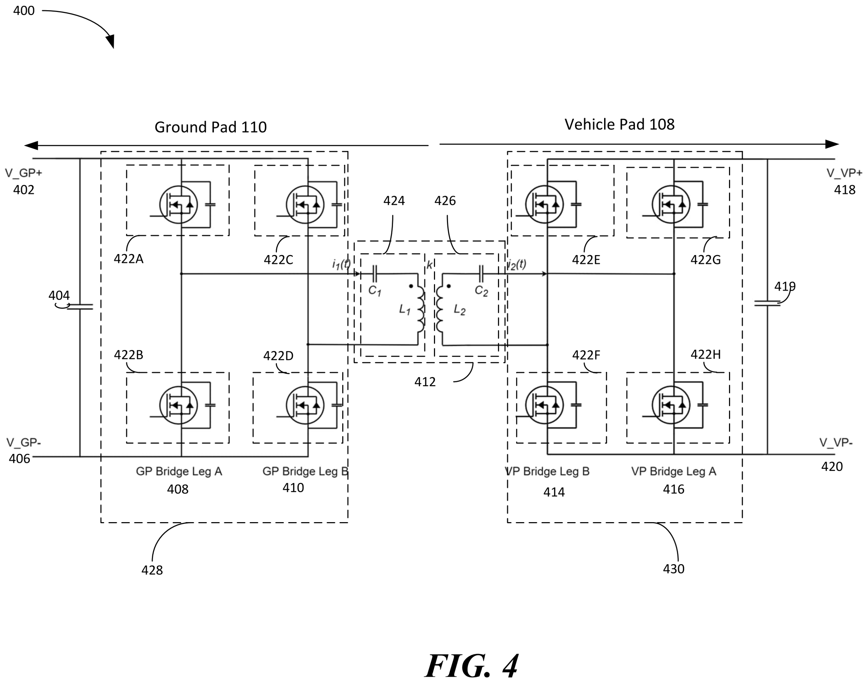

The system controller 112 may be any suitable type of controller. The system controller 112 comprises physical circuitry configured to perform the functionality of the system controller 112 described herein. The system controller 112 can include a processor and memory, a microcontroller, or the like. The system controller 112 may, in some examples, modify adjustment parameters of ground pad 110, vehicle pad 108, the like, or some combination thereof. The adjustment parameters may include, but are not limited to, a voltage of ground pad 110 such as a bus voltage of the ground pad 110, a duty cycle of ground pad 110, a duty cycle of vehicle pad 108, the like, or some combination thereof. Modification of adjustment parameters by a system controller 112 will be described further with respect to FIGS. 4-6C.

The system controller 112 may, in some examples, cause emissions measurements to be taken at different distances 104. Measurements may, for example, be taken at 10 meters (m), 20m, and 30m. Measurements at different distances 104 may, in some examples, be extrapolated to determine emissions at distances for which no emissions measurements were taken. As one example, an emission measurement for 300m may be extrapolated from measurements at shorter distances. An extrapolation line in log space may, for example, be used to estimate emissions at 300m.

### Wireless Charging Systems with H Bridge Circuits

FIGS. 2A-2D illustrate circuit schematic diagrams of example wireless charging systems 200A-200D. As shown in FIGS. 2A-2D, each of the wireless charging systems 200A-200D may include a ground pad 110 and a vehicle pad 108 that is attached to or otherwise integrated with a vehicle. For example, the ground pad 110 of the wireless charging system 200A may include a capacitor 212A, a H bridge circuit 202A, and a resonant tank 204A as shown in FIG. 2A. A vehicle pad 108 of the wireless charging system 200A may include a capacitor 214A, a H bridge circuit 208A, and a resonant tank 206A, for example, as shown in FIG. 2A. In some examples, power may be transferred from a power source (not shown in FIG. 2A) through the H bridge circuit 202A, the resonant tank 204A, the resonant tank 206A, and the H bridge circuit 208A to a battery pack (not shown in FIG. 2A) of a vehicle. This power transfer can include wireless power transfer from a coil L1 of the ground pad 110 to a coil L2 of the vehicle pad 108. Any of the wireless charging systems 200A-200D can be implemented in accordance with any suitable principles and advantages disclosed herein.

FIG. 2A illustrates a circuit schematic diagram of the wireless charging system 200A. As shown in FIG. 2A, the wireless charging system 200A corresponds to an LCC-LCC circuit architecture. As illustrated, the wireless charging system 200A includes the capacitor 212A, the H bridge circuit 202A, the resonant tank 204A, the resonant tank 206A, the H bridge circuit 208A, and the capacitor 214A. In an LCC-LCC circuit architecture, an inductor L_{f1} and capacitors C_{f1} and C₁ are coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad 108.

FIG. 2B illustrates a circuit schematic diagram of the wireless charging system 200B. As shown in FIG. 2B, the wireless charging system 200B corresponds to an LCC-Series circuit architecture. As illustrated, the wireless charging system 200B includes the capacitor 212B, the H bridge circuit 202B, the resonant tank 204B, the resonant tank 206B, the H bridge circuit 208B, and the capacitor 214B. In an LCC-series circuit architecture, an inductor L_{f1} and capacitors C_{f1} and C₁ are coupled between the H bridge circuit 202A and the ground pad coil L₁ in the ground pad 110, and the series capacitor C₂ is coupled between the H bridge circuit 208A and the vehicle pad coil L₂ in the vehicle pad 108.

FIG. 2C illustrates a circuit schematic diagram of the wireless charging systems 200C. As shown in FIG. 2C, the wireless charging system 200C corresponds to a Series-LCC circuit architecture. As illustrated, the wireless charging system 200C includes the capacitor 212C, the H bridge circuit 202C, the resonant tank 204C, the resonant tank 206C, the H bridge circuit 208C, and the capacitor 214C. In a series-LCC circuit architecture, series capacitor C₁ is coupled between the H bridge circuit 202A and the ground pad coil L₁ in the ground pad 110, and the inductor L_{f2} and capacitors C_{f2} and C₂ are coupled between the H bridge circuit 208A and the vehicle pad coil L₂ in the vehicle pad 108.

FIG. 2D illustrates a circuit schematic diagram of the wireless charging systems 200D. As shown in FIG. 2D, the wireless charging system 200D corresponds to a Series-Series circuit architecture. As illustrated, the wireless charging system 200D includes the capacitor 212D, the H bridge circuit 202D, the resonant tank 204D, the resonant tank 206D, the H bridge circuit 208D, and the capacitor 214D. In a series-series circuit architecture, series capacitor C₁ is coupled between the H bridge circuit 202A and the ground pad coil L₁ in the ground pad 110, and series capacitor C₂ is coupled between the H bridge circuit 208A and the vehicle pad coil L₂ in the vehicle 108.

### Example Wireless Charging Pad

FIG. 3 illustrates an example wireless charging pad 300 in accordance with some aspects of the present disclosure. The wireless charging pad 300 includes a switching circuit 322, a resonant tank 324, and a switch control circuit 326. The wireless charging pad 300 can charge battery packs of vehicles under relatively wide voltage ranges through toggling switches of the switching circuit 322. Any suitable principles and advantages of the wireless charging pad 300 can be implemented in an environment, such as emissions testing environment 100 of FIG. 1.

The wireless charging pad 300 may be implemented on any ground pads or vehicle pads of the wireless charging systems 200A-200D to reduce emissions and/or meet any other wireless charging specifications. For example, the wireless charging pad 300 may be a ground pad and/or a vehicle pad of any of the wireless charging systems 200A-200D. In some examples, the resonant tank 324 can correspond to any of the resonant tank 204A, resonant tank 206A, resonant tank 204B, resonant tank 206B, resonant tank 204C, resonant tank 206C, resonant tank 204D, and resonant tank 206D.

In some examples, the switching circuit 322 can correspond to any of the H bridge circuit 202A, H bridge circuit 208A, H bridge circuit 202B, H bridge circuit 208B, H bridge circuit 202C, H bridge circuit 208C, H bridge circuit 202D, and H bridge circuit 208D. However, other options are possible. Switching circuit 322 may correspond to other switching circuits. The switching circuit 322 may, as another example, correspond to as a stacked half bridge circuit.

### Example Circuit Schematic Diagram of a Wireless Charging Pad

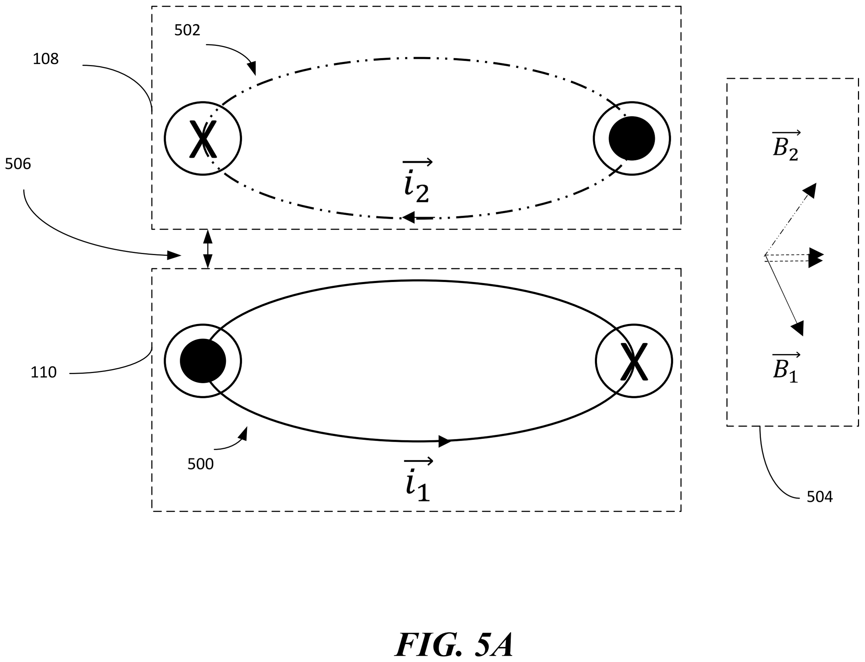

FIG. 4 illustrates an example circuit schematic diagram of a wireless charging system 400. When implementing an emissions reduction routine, a controller (e.g., system controller 112 of FIG. 1) may control circuit components of wireless charging system 400 to move towards target values for one or more adjustment parameters (e.g., ground pad bus voltage, ground pad duty cycle, vehicle pad duty cycle, etc.) The target values may be determined to reduce emissions generated during wireless charging with wireless charging system 400, for example, as described further with respect to FIGS. 5A-6C. Controlling the circuit to move towards the target values may thus advantageously reduce emissions generated during wireless charging.

The wireless charging system 400 includes a resonant LC circuit. The wireless charging system 400 may, for example, represent a bidirectional CLLC resonant dual active bridge converter topology. The wireless charging system 400, as illustrated, includes electrical circuit components corresponding to vehicle pad 108 and ground pad 110. Electrical components corresponding to the ground pad 110 include capacitor 404, resonant tank 424 and H-bridge circuit 428. A ground pad bus voltage may be applied across positive ground pad terminal 402 and negative ground pad terminal 406. A controller (e.g., system controller 112 of FIG. 1) may, in some examples, modify the ground pad bus voltage to reduce emissions, for example, as described further with respect to FIGS. 5A-6C.

The resonant tank 424 may, in some examples, correspond to any of resonant tank 204A, resonant tank 204B, resonant tank 204C, resonant tank 204D, or resonant tank 324. The resonant tank 424 and resonant tank 426 on both bridges may be designed such that the self-resonant frequencies are substantially the same.

The H-bridge circuit 428 may, in some examples, be controlled by a controller (e.g., system controller 112) through a switch control circuit (e.g., switch control circuit 326 of FIG. 3), such as to control a ground pad duty cycle for ground pad 110. This may advantageously reduce emissions, for example, as described further with respect to FIGS. 5A-6C. The H-bridge circuit 428, as illustrated, includes switch 422A, switch 422B, switch 422C, and switch 422D. Switch 422A and switch 422B, as illustrated, are part of ground pad (GP) bridge leg A 408. Switch 422C and switch 422D are part of ground pad bridge leg B 410. While switches 422, as illustrated, include n-channel metal oxide semiconductor field effect transistors (N-MOSFETS), other options are possible. Any suitable transistor may, for example, be used. Suitable transistors include, but are not limited to, p-channel metal oxide semiconductor FETs (P-MOSFETs), other field effect transistors, bipolar junction transistors (BJTs), insulated gate bipolar transistors (IGBTs), the like, or any suitable combination thereof. In some examples, the H bridge circuit 428 can correspond to any of H-bridge circuits 204A-204D of FIGS 2A-2D or H-bridge circuit 322 of FIG. 3.

Electrical components corresponding to the vehicle pad 108 include capacitor 419, H-bridge circuit 430, and resonant tank 426. A vehicle pad bus voltage may be measured across positive vehicle pad terminal 418 and negative vehicle pad terminal 420. The vehicle pad bus voltage may reflect power transferred from ground pad 110 during wireless charging. A controller (e.g., system controller 112 of FIG. 1) may, in some examples, modify the ground pad bus voltage to reduce emissions, for example, as described further with respect to FIGS. 5A-6C.

The H-bridge circuit 430 may, in some examples, be controlled by a controller (e.g., system controller 112) through a switch control circuit (e.g., switch control circuit 326 of FIG. 3), such as to control a vehicle pad duty cycle for vehicle pad 108. This may advantageously reduce emissions, for example, as described further with respect to FIGS. 5A-6C. The H-bridge circuit 430, as illustrated, includes switch 422E, switch 422F, switch 422G, and switch 422H. Switch 422E and switch 422F, as illustrated, are part of vehicle pad (VP) bridge leg B 414. Switch 422G and switch 422F, as illustrated, are part of VP bridge leg A. In some examples, the H bridge circuit 430 can correspond to any of H-bridge circuits 206A-206D of FIGS 2A-2D or H-bridge circuit 322 of FIG. 3.

The resonant tank 426 may, in some examples, correspond to at least part of any of resonant tank 206A, resonant tank 206B, resonant tank 206C, resonant tank 206D, or resonant tank 324. During wireless charging, inductor L1 of resonant circuit 424 may generate a magnetic field, powered by the ground pad inductor current (i1) of ground pad 110. The generated magnetic field may induce a current (i2) in inductor L2 of resonant circuit 426 of vehicle pad 108. Inductor L1 of ground pad 110 and inductor L2 of vehicle pad 108, as illustrated, be further coupled with coefficient k to facilitate wireless power transfer. K may, in some examples, be reduced by positioning of an EV (e.g., EV 106 of FIG. 1) including vehicle pad 108 with respect to ground pad 110. K may be constant during emissions testing, as described further with respect to FIGS. 5A-6C. A controller (e.g., system controller 112 of FIG. 1) may adjust the ground pad bus voltage, duty cycle of the ground pad, duty cycle of the vehicle pad, the like, or some combination thereof to reduce emissions.

### Example Current Flow During Wireless Charging

FIG. 5A illustrates an example emissions diagram 504 based on ground pad current loop 500 and vehicle pad current loop 502 in accordance with some aspects of the present disclosure. Emissions diagram 504 may represent emissions caused during wireless charging between ground pad 110 and vehicle pad 108 when the ground pad 110 and vehicle pad 108 are substantially aligned. Emissions diagram 504 may, in some examples, represent emissions measured at an antenna location (e.g., a location of loop antenna 102 of FIG. 1).

Ground pad current loop 500 may be a current loop inside ground pad 110. Ground pad current loop 500 may, for example, represent a sinusoidal current of ground pad 110. Ground pad current loop 500 may, in some examples, correspond to a magnitude and a phase. Vehicle pad current loop 502 may be a current loop inside vehicle pad 108. Vehicle pad current loop 502 may, for example, represent a sinusoidal current of vehicle pad 108. Vehicle pad current loop 502 may, in some examples, correspond to a magnitude and a phase. Vehicle pad 108 and ground pad 110, as illustrated, are separated by an air gap 506.

Emissions diagram 504, as illustrated, is represented by a phasor diagram including electromagnetic vectors B1 and B2. B1 of emissions diagram 504 may be an electromagnetic vector representing a flux density of the ground pad 110. The strength and direction of B1 may reflect the magnitude and phase of ground pad current loop 500. B2 of emissions 504 may be an electromagnetic vector representing a flux density of the vehicle pad 108. The strength and direction of B2 may reflect the magnitude and phase of vehicle pad current loop 502.

As illustrated with respect to FIG. 5A, when vehicle pad 108 and ground pad 110 are wirelessly transferring power, signal components representing B1 and B2 may cancel each other out in vertical directions. However, signal components representing B1 and B2 may sum in a horizontal direction. The summed signal components representing B1 and B2 in the horizontal direction may be more likely to reach loop antenna 102 as a leakage emission. Leakage emissions when vehicle pad 108 and ground pad 110 may accordingly be proportional to |i1 +i2|.

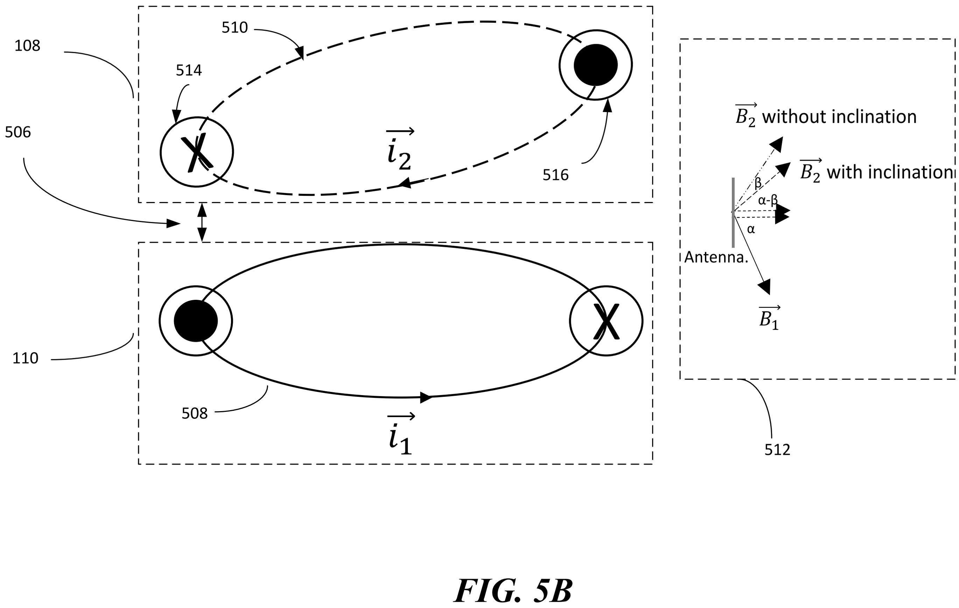

While FIG. 5A represents one example of emissions generated during wireless charging between vehicle pad 108 and ground pad 110, other options are possible. Determination of generated emissions may be more complex, in some examples. As described further with respect to FIG. 5B, for example, changes in inclination angle between vehicle pad 108 and ground pad 110 may change leakage emissions. As another example, if more coil loops are present in inductor L1 of ground pad 110 of FIG. 4, the contribution from ground pad 110 on emissions may be different than illustrated with respect to FIG. 5A. As another example, and with continued reference to FIG. 4, if more coil loops are present in inductor L2 of vehicle pad 108 the contribution from vehicle pad 108 on emissions may be different than illustrated with respect to FIG. 5A. Field strength of B1 or B2 respectively may, for example, be proportional to the number of turns (N). For example, each of L1 and L2 may include two turns. The square root of L1/L2 may, in further examples, be used to approximate the relative contribution of ground pad 110 versus vehicle pad 108. The leakage emission may be proportional to $\left|\sqrt{{L}_{1}}\vec{{i}_{1}}+\sqrt{{L}_{2}}\vec{{i}_{2}}\right|$.

As a further example, returning to FIG. 5A, one of vehicle pad 108 or ground pad 110 may have more turns than the other. For example, a higher voltage (HV) vehicle may have a different number of turns than lower voltage (LV) vehicles. System controller 112 may determine this during initialization of wireless charging to a vehicle, in further examples. System controller 112 may, in further examples, add a coefficient to an expression describing leakage emissions to describe the relative contribution of one pad over another.

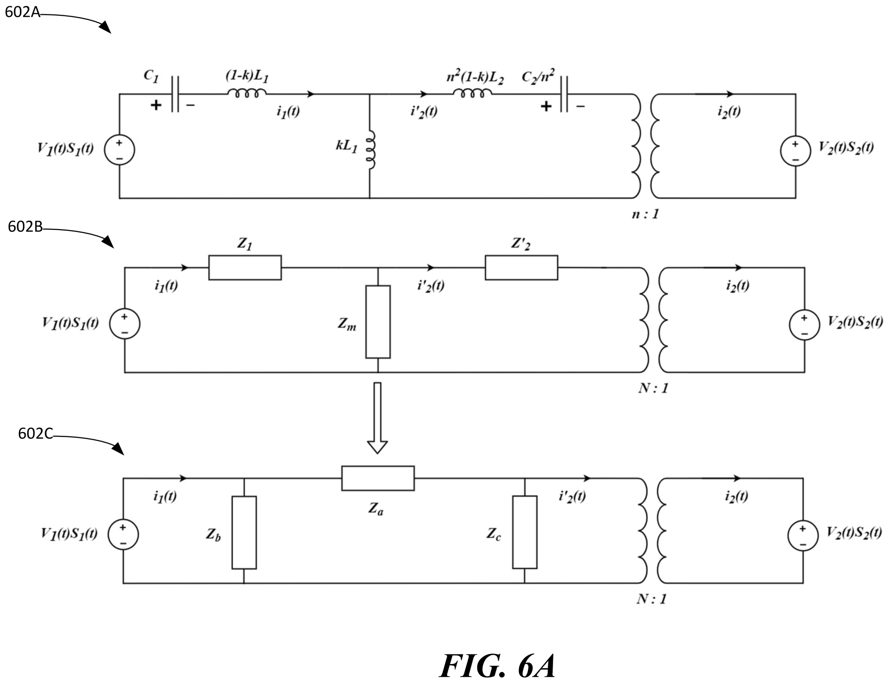

FIG. 5B illustrates an example emissions diagram 512 based on ground pad current loop 508 and vehicle pad current loop 510 in accordance with some aspects of the present disclosure. FIG. 5B may reflect an inclination of vehicle pad 108 with respect to ground pad 110. Inclination of vehicle pad 108 with respect to ground pad 110 may impact leakage emissions during wireless charging. A controller (e.g., system controller 112 of FIG. 1) may account for the effect of inclination on leakage emissions, as described further with respect to FIGS. 6A-6C.

The inclination angle of vehicle pad 108 may be impacted by a variety of factors. Rear tires of an EV including vehicle pad 108 (e.g., EV 106 of FIG. 1) may be larger and cause inclination with respect to a ground pad 110. Element 516 may, for example, represent a rear of EV 106. Element 514 may represent a middle of EV 106. System controller 112 may account for the inclination of vehicle pad 108 with respect to ground pad 110 by taking into account the horizontal component resulting from the inclination. With reference to emissions diagram 512, the magnetic flux B2 from vehicle pad 108 without taking into account inclination may be represented by angle α . The magnetic flux B1 with respect to ground pad 110 may be represented by angle α. The magnetic flux B2 from vehicle pad 108 when taking into account inclination may be represented by angle α-β. To achieve the same amount of horizontal emissions, there is a conversion factor of $\frac{cos \left(α-β\right)}{cos \left(α\right)}$ between taking into account inclination and not taking into account inclination. The leakage emissions based on the emissions may, in further examples, be represented by the expression $\left|\sqrt{{L}_{1}}⋅\vec{{i}_{1}}+\frac{cos \left(α-β\right)}{cos \left(α\right)}⋅\sqrt{{L}_{2}}⋅\vec{{i}_{2}}\right|$.

### Example Equivalent Circuits for Emission Reduction

FIG. 6A illustrates equivalent circuits 602 for a wireless charging system in accordance with some aspects of the present disclosure. Equivalent circuits 602 may be used by a controller (e.g., system controller 112) in modeling to reduce emissions generated during wireless charging in accordance with an emissions generation routine, for example, as further described herein.

Equivalent circuit 602A may, for example, represent an equivalent circuit for a bidirectional CLLC resonant dual-active-bridge converter topology as shown in FIG. 4. However, other options are possible. An equivalent circuit may, for example, be generated based on any of wireless charging system 400 of FIG. 4, wireless charging systems 200A, 200B, 200C, or 200D of FIGS. 2A-2D, the like, or some combination thereof.

Returning to FIG. 6A, a summary of components represented by equivalent circuit 602A and corresponding descriptions are provided in Table 1 below.

**Table 1: Description for Equivalent Circuit 602**

| **Component** | **Description** |
|---|---|
| *L*₁ | Ground pad coil equivalent self-inductance |
| *L*₂ | Vehicle pad coil equivalent self-inductance |
| n | Ground pad coil to vehicle pad coil effective turns ratio |
| *C*₁ | Ground pad bridge resonant tank compensation capacitance |
| *C*₂ | Vehicle pad bridge resonant tank compensation capacitance |
| *V*₁ (*t*) | Ground pad DC bus voltage |
| *V*₂ (*t*) | Vehicle pad DC bus voltage |
| *S*₁ (*t*) | Ground pad bridge switching function |
| *S*₂(*t*) | Vehicle pad bridge switching function |

In some examples, system controller 112 may use equivalent circuit 602A to determine one or more expressions based on current in the ground pad (e.g., ground pad 110 of FIG. 1) and current in the vehicle pad (e.g., vehicle pad 108 of FIG. 1). System controller 112 may, for example, determine switching current and resonant tank relationships based on equivalent circuit 602. System controller 112 may, for example, perform a Wye-Delta impedance network conversion based on equivalent circuit 602 to derive these equations. A Wye configuration of equivalent circuit 602A may be equivalent circuit 602B. A Delta configuration of equivalent circuit 602A may be equivalent circuit 602C. The system controller 112 may, using equivalent circuit 602B and equivalent circuit 602C, determine instantaneous power and real power for equivalent circuit 602.

System controller 112 may, additionally, or alternatively, represent variables of equivalent circuit 602A as quasi periodic symbols which can be approximated by the Fourier series represented here as Equation (1): $x \left(t\right) = {x}_{0} \left(t\right) + {\sum }_{k = 1}^{∞} \left({x}_{k}\left(t\right)cos\left({kω}_{s}t+{θ}_{k}\left(t\right)\right)\right)$ (1)

The system controller 112 may, for example, generate fourier series representations for fundamental harmonic approximation of the switching functions for vehicle pad 108 and ground pad 110.

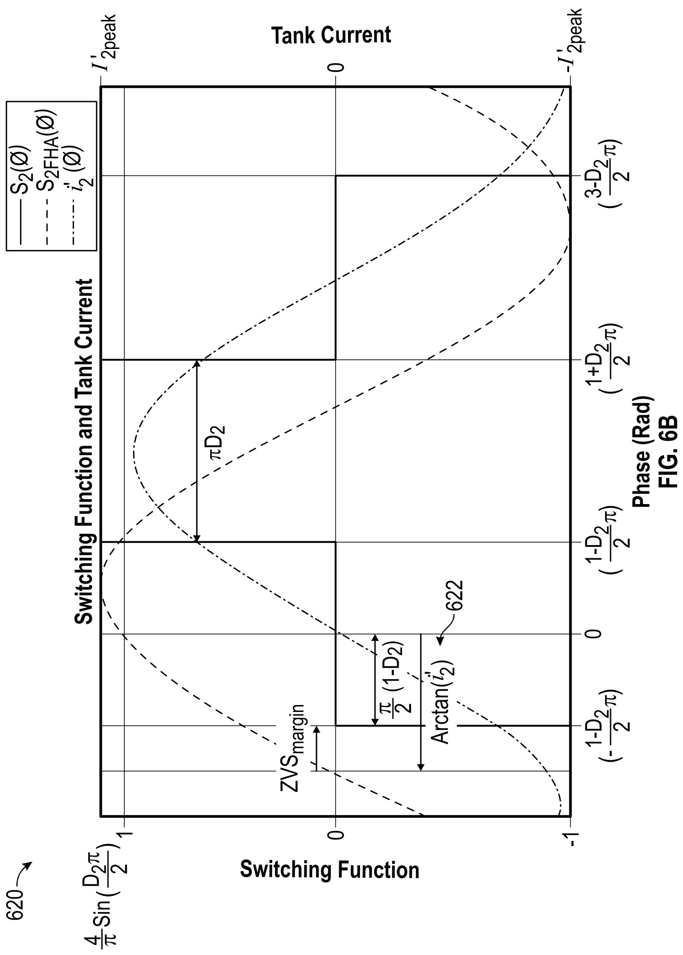

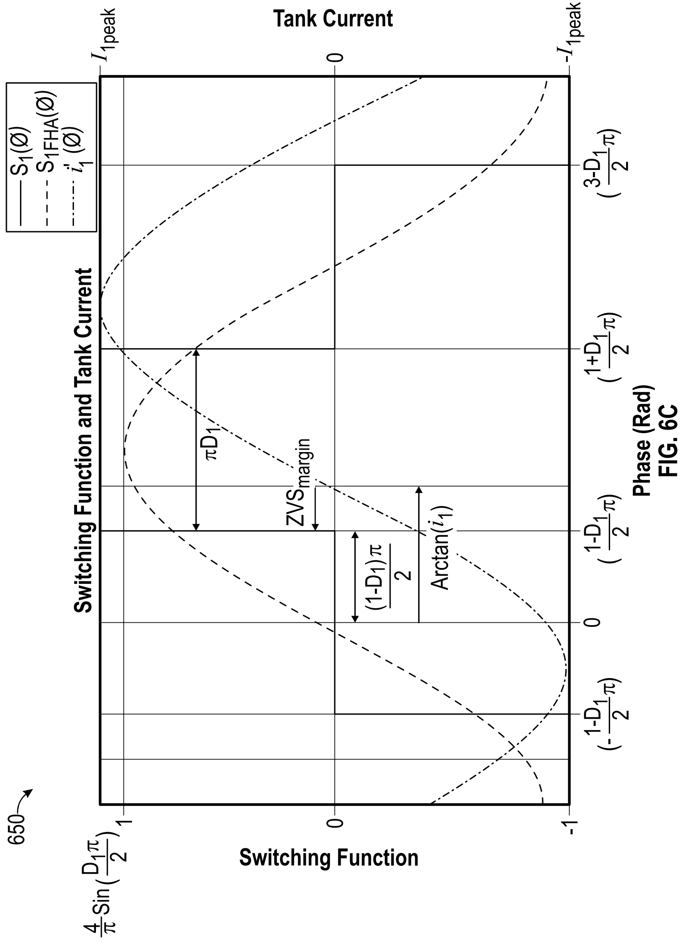

The system controller 112 may plot (or generate a representation of a plot of) the fundamental harmonic approximations of the switching functions, the switching functions, and tank current for a wireless charging pad (e.g., vehicle pad 108 and ground pad 110) of the wireless charging system, as also described with respect to FIG. 6B and FIG. 6C.

Based on the plot or representation thereof, system controller 112 may determine the real and imaginary components of the tank current for the wireless charging pad. The system controller 112 may, in some examples, make assumptions with respect to the wireless charging system (e.g., wireless charging system 200, wireless charging system 400, etc.) in determining the real and imaginary components of the tank current for the wireless charging pad. System controller 112 may, as one example, assume that a vehicle side bus voltage is fixed. System controller 112 may further assume that a battery power specification is fixed.

From the real and imaginary components of the tank current, the system controller 112 may determine a phase shift of the tank current with respect to the respective switching frequency. The system controller 112 may then determine zero voltage switching references. The system controller 112 may use the formulas to determine target values for one or more adjustment parameters (e.g., ground pad bus voltage, ground pad duty cycle, vehicle pad duty cycle, etc.) The system controller 112 may then use the electrical components of a wireless charging system (e.g., wireless charging system 200, wireless charging system 400, etc.) to move the one or more adjustment parameters towards a target value. This may advantageously reduce emissions during wireless charging.

### Example Emissions Reduction

FIG. 6B illustrates an example plot 620 representing current phase shift with respect to a vehicle pad (e.g., vehicle pad 108) in accordance with some aspects of the present disclosure. A controller (e.g., system controller 112 of FIG. 1) may, for example, generate plot 620 by plotting a reflected tank current ${i}_{2}^{′}$ for vehicle pad 108, a switching function for vehicle pad 108 (S₂), and fundamental harmonic approximated switching functions of the vehicle pad 108 (S_{2FHA}). The system controller 112 may derive expressions including one or more adjustment parameters (e.g., ground pad bus voltage, ground pad duty cycle, vehicle pad duty cycle, etc.). As part of an emissions reduction routine, the system controller 112 may determine target values for the adjustment parameters based on the derived expressions, one or more control objectives, and the like, or some combination thereof. The target values for the adjustment parameters may be selected to reduce emissions generated during wireless charging between vehicle pad 108 and ground pad 110 to below a threshold.

With respect to the vehicle side, the system controller 112 may assume that the reference phase in switching functions is given by *ϕᵣ* = -*θ* and vehicle pad side switching function phase is 0.

The vehicle pad side switching function may then be expressed as Equation (2) and Equation (3): ${S}_{1} = \frac{4}{π} sin \left(\frac{{D}_{1} π}{2}\right) cos \left(-θ\right) + j \frac{4}{π} sin \left(\frac{{D}_{1} π}{2}\right) sin \left(-θ\right)$ (2) ${S}_{2} = \frac{4}{π} sin \left(\frac{{D}_{2} π}{2}\right)$ (3)

In Equation 2, D1 may reflect the duty cycle of the ground pad 110. In Equation 6, D2 may reflect the duty cycle of the vehicle pad 108.

The system controller 112 may use information including, but not limited to, plot 620 and the vehicle pad side switching function, to derive real and imaginary components of the reflected vehicle side tank current as Equation (4) and Equation (5), below. $real \left({i}_{2}^{′}\right) = - \frac{4 {V}_{1} sin \left(\frac{{D}_{1} π}{2}\right)}{{πX}_{a}} sin \left(θ\right)$ (4) $imag \left({i}_{2}^{′}\right) = \frac{4 {nV}_{2} sin \left(\frac{{D}_{2} π}{2}\right)}{{πX}_{c}} + \frac{4 {nV}_{2} sin \left(\frac{{D}_{2} π}{2}\right) - 4 {V}_{1} sin \left(\frac{{D}_{1} π}{2}\right) cos \left(θ\right)}{{πX}_{a}}$ (5)

In Equations (5) and (6), Xₐ, X_{b}, and X_{c} may reflect impedances derived from an equivalent circuit. Xₐ, X_{b}, and X_{c} may, for example, reflect impedances derived from such as equivalent circuits 602 of FIG. 6A.

The system controller 112 may further derive a vehicle side tank current phase shift 622 with respect to the vehicle pad side switching function. The vehicle side current phase shift may, for example, be based on the real and imaginary components of the reflected vehicle side tank current. The system controller 112 may further determine the zero voltage switching (ZVS) references using the vehicle side tank current phase shift 622. The ZVS may be a switching technique used to minimize switching losses and improve efficiency. A ZVS margin may, for example, reflect a range within which ZVS operation is possible in the wireless charging system. The ZVS margin may remain positive, for example, to improve a likelihood that switch transitions occur at zero voltage. The system controller 112 may, in further examples, use the ZVS margin as a control objective for consideration in reducing emissions.

The system controller 112 may, for example, consider control objectives including, but not limited to, output power specified for the battery (P_{req}), appropriate limits for ground pad bus voltage (V1),tank root mean square (RMS) current specification (iᵣₘₛ₁) for ground pad 110, tank RMS current specification for vehicle pad 108 (iᵣₘₛ₂), ZVS margin, the like, or some combination thereof.

The control objectives may be based on assumptions, in some examples. The system controller 112 may, in some examples, make assumptions with respect to the wireless charging system (e.g., wireless charging system 200, wireless charging system 400, etc.) System controller 112 may, as one example, assume that a vehicle side bus voltage (V₂) is fixed. System controller 112 may further assume that a battery power specification (P_{req}) is fixed. System controller 112 may then, as part of an emissions reduction routine, control one or more adjustment parameters within the confines of the control objectives to reduce expected emissions to below a threshold.

The control objectives may, for example, be to:
Regulate the output power P *= P_{req}*
Determine appropriate *V*₁ such that *V*₁ ∈ [*V*_{1*min*}, *V*_{1*max*}]
Remain within Tank RMS current specifications: ${i}_{rms 1} < {i}_{rms 1 max}$ ${i}_{rms 2} < {i}_{rms 2 max}$
Remain within ZVS operation specifications: ${θ}_{zvs 1} \geq 0$ ${θ}_{zvs 2} \geq 0$

To satisfy the control objectives the system controller 112 may modify one or more adjustment parameters including, but not limited to, ground bus pad voltage (V₁), a duty cycle of the ground pad 110 (D₁), a duty cycle of the vehicle pad 108 (D₂), switching frequency (fₛ), and switching function phase shift (*θ*), the like, or some combination thereof.

System controller 112 may, for example, generate expressions relating vehicle pad side output power, reflected vehicle side tank current (for both real and imaginary components), and ground pad bus voltage. System controller 112 may use these expressions to generate a tank current vector for vehicle pad 108 (*̅i̅*̅₂̅) and a tank current vector for ground pad 110 (*̅i̅*̅₁̅). The tank current vector expression may be represented by Equation (6) and Equation (7) below. These equations can be derived for a given vehicle side bus voltage V₂ and vehicle side output power P. $\overline{{ι}_{1}} = \left[real\left({i}_{1}\right),imag\left({i}_{1}\right)\right]$ (6) $\overline{{ι}_{2}} = \left[real\left({i}_{2}\right),imag\left({i}_{2}\right)\right]$ (7)

Equations (6) and (7) include real and imaginary components of a tank current expression for the ground pad 110 (i₁) and real and imaginary components of a tank current expression for vehicle pad 108 (i₂). The tank current expressions include variables representing adjustment parameters. Equations (4) and (5) for reflected tank current for vehicle pad 108, for example, include variables D₁ representing duty cycle for ground pad 110 and D₂ representing duty cycle for vehicle pad 108.

To reduce emissions, system controller 112 may analyze the tank current vectors in light of an expression representing leakage emissions. Expressions representing leakage emissions are described herein at least with respect to FIGS. 5A-5B. As one example, with reference to FIG. 5B, a leakage emissions expression may be $\left|\sqrt{{L}_{1}}⋅\vec{{ι}_{1}}+\frac{cos \left(α-β\right)}{cos \left(α\right)}⋅\sqrt{{L}_{2}}⋅\vec{{ι}_{2}}\right|$. The system controller 112 may, in some examples, set the leakage emissions expression to a threshold value to determine target values for one or more adjustment parameters (e.g., ground pad bus voltage, ground pad duty cycle, vehicle pad duty cycle, etc.). The system controller 112 may, for example, select target values to reduce and/or minimize the leakage expression. The system controller 112 may then adjust electrical components of the wireless charging system (e.g., wireless charging system 200, wireless charging system 400, etc.) to move towards the target values. This may advantageously reduce leakage emissions from wireless charging with the wireless charging system.

In certain embodiments, the system controller 112 can perform optimization to minimize the following expression: $\left|\sqrt{{L}_{1}}⋅\vec{{ι}_{1}}+\frac{cos \left(α-β\right)}{cos \left(α\right)}⋅\sqrt{{L}_{2}}⋅\vec{{ι}_{2}}\right|$. Emissions reduction optimization can be solved for ground pad bus voltage *V*₁, ground pad ZVS phase *θ*_{*zvs*1}, vehicle side ZVS phase *θ*_{*zvs*2}, and switching function phase shift *θ* while keeping the following parameters: ${V}_{1} ∈ \left[{V}_{1 min}, {V}_{1 max}\right]$ ${i}_{rms 1} < {i}_{rms 1 max}$ ${i}_{rms 2} < {i}_{rms 2 max}$ ${θ}_{zvs 1} \geq 0$ ${θ}_{zvs 2} \geq 0$

FIG. 6C illustrates an example plot 650 representing current phase shift with respect to a ground pad (e.g., ground pad 110 of FIG. 1) in accordance with some aspects of the present disclosure. The system controller 112 may generate plot 650 based on an expression representing a switching function for ground pad 110 (S₁), a fundamental harmonic representation of the switching function for ground pad 110 (S_{1FHA}), and a tank current. Based on this information, system controller 112 may determine expressions representing a ground pad side phase shift and a ZVS margin using any of the methods described above with respect to FIG. 6B. The system controller 112 may further derive expressions representing tank current vectors for ground pad 110 and vehicle pad 108 using any of the methods described with respect to FIG. 6B.

The system controller 112 may use these tank current expressions to reduce leakage emissions. The system controller 112 may, for example, analyze the expressions in light of control objectives (e.g., output power, tank RMS current specifications, ZVS margin). The tank current vectors may, for example, represent one or more adjustment parameters (e.g., ground pad bus voltage, ground pad duty cycle, vehicle pad duty cycle, etc.). The system controller 112 may, in further examples, determine target values for one or more adjustment parameters based a leakage expression including the tank current vectors. The leakage expression may, with reference to FIG. 5B may be $\sqrt{{L}_{1}} ⋅ \vec{{ι}_{1}} + \frac{cos \left(α-β\right)}{cos \left(α\right)} ⋅ \sqrt{{L}_{2}} ⋅ \left.\vec{{ι}_{2}}\right|$. The system controller 112 may then adjust electrical components of the wireless charging system (e.g., wireless charging system 200, wireless charging system 400, etc.) to move towards the target values. This may advantageously reduce leakage emissions from wireless charging with the wireless charging system.

A controller (e.g., system controller 112 of FIG. 1) may, as an example, determine a target value for ground pad bus voltage using any of the methods described herein. The target value may correspond to a value at which the impact of the ground pad bus voltage may change the contribution of the ground pad RMS current (i₁ᵣₘₛ), and a vehicle pad RMS current (i₂ᵣₘₛ) with respect to an expression representing leakage emissions during wireless charging.. The leakage expression may, with reference to FIG. 5B may be $\sqrt{{L}_{1}} ⋅ \vec{{ι}_{1}} + \frac{cos \left(α-β\right)}{cos \left(α\right)} ⋅ \sqrt{{L}_{2}} ⋅ \left.\vec{{ι}_{2}}\right|$. Returning to FIG. 6C, the system controller 112 may further modify the ground pad voltage within a wireless system (e.g., wireless charging system 200, wireless system 400, etc.) to move toward the target value.

### Terminology

All of the methods and tasks described herein may be performed and fully automated by one or more controllers. The one or more controllers may, in some cases, include multiple distinct computers or computing devices (e.g., physical servers, workstations, storage arrays, cloud computing resources, etc.) that communicate and interoperate over a network to perform the described functions. Each such computing device typically includes a processor device (or multiple processors) that executes program instructions or modules stored in a memory or other non-transitory computer-readable storage medium or device (e.g., solid state storage devices, disk drives, etc.). The various functions disclosed herein may be embodied in such program instructions or may be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid-state memory chips or magnetic disks, into a different state. In some embodiments, the computer system may be a cloud-based computing system whose processing resources are shared by multiple distinct business entities or other users.

A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Depending on the embodiment, certain acts, events, or functions of any of the processes or algorithms described herein can be performed in a different sequence, can be added, merged, or left out altogether (e.g., not all described operations or events are necessary for the practice of the algorithm). Moreover, in certain embodiments, operations or events can be performed concurrently, e.g., through multi-threaded processing, interrupt processing, or multiple processors or processor cores or on other parallel architectures, rather than sequentially.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled," as generally used herein, refers to two or more elements that may be either directly connected, or connected by way of one or more intermediate elements. Likewise, the word "connected," as generally used herein, refers to two or more elements that may be either directly connected, or connected by way of one or more intermediate elements. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "may," "for example," "such as" and the like, unless specifically stated otherwise, or otherwise understood within the context as used, is generally intended to convey that certain examples include, while other examples do not include, certain features, elements and/or states. Thus, such conditional language is not generally intended to imply that features, elements and/or states are in any way required for one or more examples.

The foregoing description has been described with reference to specific examples. However, the illustrative discussions above are not intended to be exhaustive or to limit the inventions to the precise forms described. Many modifications and variations are possible in view of the above teachings. Others skilled in the art are thereby enabled to best utilize the techniques and various examples with various modifications as suited to various uses.

Although the disclosure and examples have been described with reference to the accompanying drawings, various changes and modifications will become apparent to those skilled in the art. Such changes and modifications are to be understood as being included within the scope of the disclosure.

## Claims

1. A method of wireless power transfer, the method comprising:
receiving emissions data, the emissions data comprising an emission measurement associated with inductive charging between a vehicle pad and a ground pad;
determining one or more adjustment parameters based on the emissions data, the one or more adjustment parameters comprising a bus voltage of the ground pad; and
adjusting the bus voltage of the ground pad in accordance with the one or more adjustment parameters.

2. The method of Claim 1, further comprising adjusting a duty cycle of a switching circuit, wherein the one or more adjustment parameters comprises the duty cycle of the switching circuit.

3. The method of Claim 2, wherein the switching circuit is coupled to an LC resonant circuit, the LC resonant circuit comprising a coil of the ground pad, the ground pad inductively coupled to a coil of the vehicle pad, and/or wherein the switching circuit is an H bridge circuit.

4. The method of one of the preceding claims, wherein said determining one or more adjustment parameters based on the emissions data comprises determining a target value for each of the one or more adjustment parameters using an emissions reduction routine.

5. The method of Claim 4, wherein the emissions reduction routine comprises:
determining one or more expressions representing emissions based on a first current in the ground pad and a second current in the vehicle pad;
based on the one or more expressions, determining zero voltage switching (ZVS) references;
deriving a target duty cycle of a switching circuit based on the ZVS references, the switching circuit being included in one of the ground pad or the vehicle pad; and
adjusting the duty cycle of the switching circuit based on the derived target duty cycle.

6. The method of Claim 5, further comprising storing the target value for the bus voltage of the ground pad and the target duty cycle for the switching circuit as the one or more adjustment parameters, and/or wherein said determining one or more adjustment parameters comprises:
assuming a vehicle side bus voltage is fixed; and
assuming a battery power is fixed.

7. A system for wireless power transfer, the system comprising:
one or more controllers configured to:
receive emissions data, the emissions data comprising an emission measurement associated with inductive charging between a vehicle pad and a ground pad in an environment;
determine one or more adjustment parameters based on the emissions data, the one or
more adjustment parameters comprising a bus voltage of the ground pad; and
adjust the bus voltage of the ground pad in accordance with the one or more adjustment parameters.

8. The system of Claim 7, wherein the one or more controllers are further configured to adjust a duty cycle of a switching circuit, wherein the one or more adjustment parameters comprises the duty cycle of the switching circuit.

9. The system of Claim 8, wherein the switching circuit is coupled to an LC resonant circuit, the LC resonant circuit comprising a coil of the ground pad, the ground pad inductively coupled to a coil of the vehicle pad, and/or wherein the switching circuit is an H bridge circuit.

10. The system of one of Claims 7 to 9, wherein, the one or more controllers are configured to determine one or more adjustment parameters based on the emissions data by at least determining a target value for each of the one or more adjustment parameters by implementing an emissions reduction routine.

11. The system of Claim 10, wherein to implement the emissions reduction routine, the one or more controllers are configured to:
determine one or more expressions representing emissions based on current in the ground pad and current in the vehicle pad;
based on the one or more expressions, determine zero voltage switching (ZVS) references;
derive a target duty cycle of a switching circuit based on the ZVS references, the switching circuit corresponding to at least one of the ground pad or the vehicle pad; and
adjust the duty cycle of the switching circuit based on the derived target duty cycle, preferably wherein, to implement the emissions reduction routine, the one or more controllers are further configured to store the target value for the bus voltage of the ground pad, and the target duty cycle for at least one of the ground pad or the vehicle pad as the one or more adjustment parameters.

12. The system of one of Claims 7 to 11, further comprising the ground pad, the ground pad comprising at least part of the one or more controllers.

13. The system of one of Claims 7 to 12, further comprising the vehicle pad, the vehicle pad comprising at least part of the one or more controllers, and/or
wherein a controller of the one or more controllers is located in at least one of a wall of the environment, in the ground pad, or in the vehicle pad.

14. A non-transitory computer-readable storage comprising instructions stored thereon that, when executed, cause one or more controllers to perform the method of one of claims 1 to 6.

15. The non-transitory computer-readable storage of Claim 14, wherein, to determine one or more adjustment parameters based on the emissions data, the instructions, when executed further cause the one or more controllers to perform operations comprising determining a target value for each of the one or more adjustment parameters by implementing an emissions reduction routine.
